# EUROPÄISCHE PATENTSCHRIFT

(11) **EP 3 459 766 B1**
(45) Veröffentlichungstag und Bekanntmachung des Hinweises auf die Patenterteilung: **03.03.2021**
(21) Anmeldenummer: 18196281.2
(22) Anmeldetag: 11.05.2015
(51) Int. Cl.: B60D 1/06, B60D 1/54, B60D 1/62, B60D 1/64

(54) **ANHÄNGEKUPPLUNG MIT EINEM KUPPLUNGSNUTZUNGSSENSOR**
TRAILER COUPLING WITH A COUPLING USAGE SENSOR
ATTELAGE DOTÉ D'UN CAPTEUR D'UTILISATION D'ACCOUPLEMENT

(30) Priorität: 30.05.2014 DE 102014008077
(43) Veröffentlichungstag der Anmeldung: 27.03.2019
(62) Teilanmeldung aus: 15167052.8
(73) Patentinhaber: WESTFALIA - Automotive GmbH, 33378 Rheda-Wiedenbrück (DE)
(72) Erfinder: Sielhorst, Bernhard, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 2 316 668
- EP-A1- 2 316 669
- DE-U1-202011 051 955
- US-A1- 2006 085 099

## Beschreibung

Die Erfindung betrifft eine Anhängekupplung für ein Kraftfahrzeug, insbesondere einen Personenkraftwagen, gemäß dem Oberbegriff des Anspruchs 1.

Derartige Anhängekupplungen sind in EP 2 316 669 A1 und in EP 2 316 668 A1 erläutert.

Es ist allgemein bekannt, bei einer Anhängekupplung eine Stromversorgungseinrichtung vorzusehen, beispielsweise eine Steckdose, an die ein Anhänger angeschlossen werden kann. Ein Stecker des Anhängers wird in die Steckdose eingesteckt und somit der Anhänger mit Strom versorgt, beispielsweise dessen Beleuchtungsanlage. US 2006/0085099 A1 beschreibt ein Verfahren und ein System zum Betreiben einer derartigen Steckdose. Weiterhin ist es bekannt, an einem Kuppelträger oder einer sonstigen Stelle eine Sensorik vorzusehen, mit der ein Kupplungsnutzungszustand erfassbar ist, beispielsweise eine Stützlast oder dergleichen.

Eine Fehlbedienung der Anhängekupplung ist nicht selten, beispielsweise dass eine zu große Stützlast verwendet wird oder dass versehentlich zwar zunächst der Anhängerstecker in die Steckdose des Kraftfahrzeugs bzw. der Anhängekupplung eingesteckt wird, aber dann vergessen wird, den Anhänger sicher anzukuppeln. Es kommt auch vor, dass zwar den Anhänger an das Kraftfahrzeug angehängt, jedoch die elektrische Verbindung nicht hergestellt wird.

Es ist daher die Aufgabe der vorliegenden Erfindung, eine Anhängekupplung bereitzustellen, die zur Verhinderung von Fehlbedienungen beiträgt.

Zur Lösung der Aufgabe ist eine Anhängekupplung gemäß der technischen Lehre des Anspruchs 1 vorgesehen.

Der Grundgedanke der Erfindung ist eine logische Verknüpfung zwischen einerseits der Belastung der Anhängekupplung, das heißt des Kupplungsnutzungssignals, und andererseits des Elektro-Nutzungssignals. Beispielsweise ist vorgesehen, dass anhand eines Tastschalters, einer Überprüfung, ob ein Stromkreis des Anhängers mit der Stromversorgungseinrichtung der Anhängekupplung verbunden ist oder dergleichen, durch die Elektro-Nutzungssensoranordnung festgestellt wird, ob der Stecker oder eine sonstige elektrische Verbindungseinrichtung des Anhängers mit der auf Seiten des Kraftfahrzeugs bzw. der Anhängekupplung vorgesehenen Stromversorgungseinrichtung, beispielsweise einer Anhänger-Steckdose, verbunden ist. Wenn also beispielsweise der Stecker in die Steckdose gesteckt ist, andererseits eine Nutzung der Kupplung nicht feststellbar ist, erzeugt die Anhängekupplung, erfindungsgemäß deren Auswerteeinrichtung, eine Störungsinformation.

Das Kraftfahrzeug, das auch als Zugfahrzeug bezeichnet werden kann, ist beispielsweise ein Personenkraftwagen mit einem Verbrennungsmotor und/oder einem Elektromotor. Das erfindungsgemäße Prinzip ist aber selbstverständlich auch bei Nutzfahrzeugen jederzeit anwendbar.

Am Kuppelträger ist z.B. ein Kuppelkörper oder ein Kuppelelement, z.B. Kupplungskugel, zum Ankuppeln des Anhängers oder des Lastenträgers angeordnet. Der Kuppelträger ist z.B. ein Kupplungsarm. Das Kuppelelement ist vorzugsweise eine Kupplungskugel. Andere Ausführungsformen von Kuppelelementen, beispielsweise polygonalen Kuppelelementen, sind ohne weiteres denkbar. Das Kuppelelement kann auch eine Steckaufnahme beispielsweise für einen Lastenträger umfassen.

Die Störungsinformation umfasst beispielsweise ein Datensignal, das an das Bordnetz des Kraftfahrzeugs übermittelt wird, um beispielsweise im Cockpit eine Störung anzuzeigen (optisch und/oder akustisch). Es kann aber auch direkt eine Warneinrichtung oder dergleichen an Bord der Anhängekupplung vorgesehen sein, beispielsweise ein Lautsprecher und/oder eine optische Warneinrichtung, um einem Bediener die Fehlbedienung direkt zu signalisieren. Wenn also beispielsweise der Lautsprecher derart laut tönt, wenn eine Störung vorliegt, dass dies auch im Innenraum des Kraftfahrzeugs bzw. Fahrgastraum hörbar ist, kann der Fahrer ohne weiteres erkennen, dass eine Störung vorliegt und der Anhänger nicht korrekt angekuppelt ist, auch wenn der Lautsprecher außerhalb des Fahrgastraums angeordnet ist, z.B. im Freien oder im Gepäckraum. Der Lautsprecher ist z.B. ein Bestandteil der Auswerteeinrichtung oder einer Steuerung der Anhängekupplung.

Der mindestens eine Kupplungsnutzungssensor umfasst beispielsweise einen an einem Trageelement der Anhängekupplung, beispielsweise dem Kuppelträger oder einer Trägeranordnung zum Halten des Kuppelträgers, angeordnete Belastungssensor-Anordnung zur Erzeugung mindestens eines Lastsignals in Abhängigkeit von einer mechanischen Belastung der Anhängekupplung, wobei das Kupplungsnutzungssignal anhand des mindestens einen Lastsignals gebildet ist. Es ist beispielsweise möglich, dass das Lastsignal gleichzeitig das Kupplungsnutzungssignal darstellt. Bei der mechanischen Belastung kann es sich beispielsweise um die Stützlast, die Zuglast oder beides, der Anhängekupplung handeln. Diese Stützlast oder Zuglast wird zwar vorzugsweise direkt am Kuppelträger, z.B. am Kupplungsarm, ermittelt. Es ist aber auch möglich, die Stützlast oder Zuglast abseits davon, beispielsweise an einer Trägeranordnung, die den Kuppelträger trägt, zu messen. Beispielsweise kann der mindestens eine Lastsensor einen Dehnungsmessstreifen oder dergleichen umfassen, der an einem Querträger hinten am Heck des Kraftfahrzeugs angeordnet ist.

Die mechanische Belastung ist beispielsweise durch den Anhänger oder Lastenträger verursacht, beispielsweise dessen Gewichtskraft oder Zuglast. Es ist aber auch denkbar, dass beispielsweise eine Winkelinformation die mechanische Belastung darstellt, d.h. dass beispielsweise ein Winkelsensor durch den Anhänger oder Lastenträger betätigt wird. Wenn der Winkelsensor erfasst, dass einen Anhänger oder Lastenträger angekuppelt ist, hingegen das Elektro-Nutzungssignal signalisiert, dass die elektrische Verbindung zwischen Bordnetz des Kraftfahrzeugs und Bordnetz des Anhängers nicht vorhanden ist, liegt ein Fehler vor, welcher zur Störungsinformation der Auswerteeinrichtung führt.

Bevorzugt ist es, wenn das Lastsignal in Abhängigkeit von mindestens einem Schwellwert zur Ermittlung der Störungsinformation ausgewertet wird. Das Kupplungsnutzungssignal signalisiert beispielsweise eine Nutzung der Anhängekupplung erst bei einer Überschreitung eines Schwellwerts der mechanischen Belastung. Wenn also beispielsweise nur eine geringe Last am Kupplungsarm angreift, die nicht von einem Lastenträger oder Anhänger herrührt, sondern beispielsweise durch einen Benutzer, der sich auf dem Kupplungsarm mit geringer Kraft abstützt, führt dies nicht zur Störungsinformation der Überwachungseinrichtung, auch wenn die Elektro-Nutzungssensoranordnung eine Nutzung der Stromversorgungseinrichtung durch den Anhänger anzeigt.

Das mindestens eine Lastsignal oder das Kupplungsnutzungssignal umfasst zweckmäßigerweise eine logische Verknüpfung mindestens zweier Last-Sensorinformationen, beispielsweise Belastungen des Kuppelträgers in unterschiedlichen Kraftrichtungen oder redundante Last-Sensorinformationen. Auf diesem Wege, insbesondere aufgrund der Redundanz, kann eine höhere Sicherheit herbeigeführt werden. Es ist aber auch möglich, dass nur dann, wenn sowohl Zuglast als auch Stützlast vorliegt oder beispielsweise von dem mindestens einen Kupplungsnutzungssensor erfasst wird, dass eine Stützlast angekuppelt ist und zudem auch sichergestellt ist, dass beispielsweise ein Aufnahmemaul einer Zugkugelkupplung des Anhängers das Kuppelelement, beispielsweise die Kupplungskugel umschließt, die Last also nicht von einer irrelevanten Belastung herrührt, beispielsweise dem Fuß eines Bedieners, ist die Last-Sensorinformationen gültig.

Die Auswerteeinrichtung signalisiert in der Störungsinformation vorzugsweise dann einen Fehler, wenn das Elektro-Nutzungssignal eine Nutzung der Stromversorgungseinrichtung anzeigt und das Kupplungsnutzungssignal keine Nutzung der Anhängekupplung durch einen Anhänger oder Lastenträger signalisiert. Wenn also beispielsweise eine Steckdose der Anhängekupplung genutzt wird, jedoch kein Anhänger oder Lastenträger die Anhängekupplung nutzt, beispielsweise mechanisch belastet, wird die Störung ausgegeben. Bevorzugt ist in diesem Fall das Kraftsignal nur dann relevant, wenn es unterhalb eines vorbestimmten Schwellwerts ist. Der Fehler umfasst dann beispielsweise eine Information "Anhänger nicht angehängt, Steckdose jedoch genutzt". Dies kann beispielsweise im Cockpit des Kraftfahrzeugs angezeigt werden.

Die Auswerteeinrichtung signalisiert in der Störungsinformation erfindungsgemäß einen Fehler, wenn das Elektro-Nutzungssignal keine Nutzung der Stromversorgungseinrichtung anzeigt, also beispielsweise eine Steckdose ungenutzt ist und/oder keine elektrische Verbindung zwischen dem Bordnetz von Kraftfahrzeug und Anhänger hergestellt ist, und das Kupplungsnutzungssignal eine Nutzung der Anhängekupplung durch einen Anhänger oder Lastenträger signalisiert. Wenn also beispielsweise eine Belastung oberhalb eines vorbestimmten Schwellwerts vorhanden ist, der relativ schwere Anhänger oder Lastenträger auf der Anhängekupplung lastet, zeigt die Auswerteeinrichtung mit der Störungsinformation beispielsweise einen Fehler folgendermaßen an: Anhänger angehängt, Anhänger-Bordnetz nicht mit dem Kraftfahrzeug-Bordnetz verbunden.

Die zu verknüpfenden Last-Sensorinformationen umfassen zweckmäßigerweise ein Stützlastsignal und ein Zuglastsignal, so dass nur bei einer Überschreitung eines Stützlast-Schwellwerts und eine Zuglast-Schwellwerts das mindestens eine Lastsignal eine mechanische Verbindung zwischen Anhänger und Kraftfahrzeug signalisiert. Das kann bedeuten, dass beispielsweise das Gespann bestehend aus Kraftfahrzeug und Anhänger anfährt, mithin also eine Zuglast ermittelt wird, und erst dann überprüft wird, ob die elektrischen Bordnetze von Anhänger und Kraftfahrzeug miteinander verbunden sind und gegebenenfalls, wenn beispielsweise der Stecker des Anhängers nicht in der Steckdose der Anhängekupplung steckt, der Fehler "keine elektrische Verbindung zwischen Kraftfahrzeug und Anhänger vorhanden" signalisiert wird, mit anderen Worten also die Störungsinformation erzeugt wird.

Eine an sich eigenständige Erfindung stellt dar, dass der Kuppelträger an einem Halter, der an dem Kraftfahrzeug befestigt oder befestigbar ist, zwischen einer Gebrauchsstellung, in welcher der Kuppelträger nach hinten vor ein Heck des Kraftfahrzeugs zum Ankuppeln eines Anhängers oder eines Lastenträgers vorsteht, und einer Nichtgebrauchsstellung verstellbar ist, in welcher der Kuppelträger von dem Halter entfernt oder näher zu dem Kraftfahrzeug hinbewegt ist, und dass die oder eine Auswerteeinrichtung eine oder die Störungsinformation anhand einer logischen Verknüpfung des Gebrauchsstellungssignals mit dem Elektro-Nutzungssignal erzeugt.

Der Grundgedanke dabei ist es, dass die oder eine Störungsinformation anhand des Gebrauchsstellungssignals und des Elektro-Nutzungssignals erzeugt wird. Wenn also beispielsweise eine Nutzung der Stromversorgungseinrichtung vorhanden ist, die Anhängekupplung jedoch nicht in der Gebrauchsstellung ist, wird der Fehler erzeugt. Besonders bevorzugt ist die Kombination des Gebrauchsstellungssignals mit dem Elektro-Nutzungssignal und dem Kupplungsnutzungssignal. Wenn also beispielsweise die Gebrauchsstellung erreicht ist, die Anhängekupplung genutzt wird und dann keine elektrische Verbindung zwischen den Bordnetzen von Kraftfahrzeug und Anhänger vorhanden ist, erzeugt die Auswerteeinrichtung die Störungsinformation.

Mithin ist es also vorteilhaft, wenn die Auswerteeinrichtung die Störungsinformation anhand einer logischen Verknüpfung des Gebrauchsstellungssignals mit dem Elektro-Nutzungssignal und dem mindestens einen Kupplungsnutzungssignal erzeugt.

Der mindestens eine Kupplungsnutzungssensor umfasst zweckmäßigerweise einen Winkelsensor zur Erfassung einer Winkelstellung des Anhängers oder des Lastenträgers relativ zu dem Kuppelträger. Der Winkelsensor umfasst beispielsweise einen Sensorgeber, der durch eine Drehbewegung des Anhängers relativ zum Kraftfahrzeug oder Kuppelträger betätigbar ist und den Drehwinkelsensor, beispielsweise einen magnetischen Sensor, betätigt, so dass dieser das Winkelsignal erzeugen kann, das die Winkelstellung des Anhängers relativ zum Kuppelträger repräsentiert.

Es ist auch möglich, dass der Winkelsensor oder die Anordnung mehrerer Winkelsensoren optische Sensoren und/oder induktive Sensoren umfassen oder dadurch gebildet sind. Die Sensoren erfassen eine Winkelstellung des Anhängers relativ zum Kraftfahrzeug zweckmäßigerweise berührungslos, d.h. ohne einen beispielsweise drehbar am Kuppelelement, insbesondere der Kupplungskugel, gelagerten Sensorgeber. Die Sensoren werden beispielsweise durch die Kupplung des Anhängers, zum Beispiel eine Zugkugelkupplung, betätigt oder erregt. Es ist möglich, dass ein induktiver Sensor oder die erfindungsgemäße Anhängekupplung beispielsweise schon einen Erzeuger für ein magnetisches Feld, z.B. einen Permamentmagneten, an Bord hat. Das Feld wird beispielsweise durch die Kupplung des Anhängers verändert, wenn sich die Winkelstellung des Anhängers relativ zum Kraftfahrzeug ändert. Ein solcher berührungslos, beispielsweise optisch oder induktiv oder beides arbeitender Sensor kann beispielsweise eine Winkelstellung einer Kugelkupplungsaufnahme relativ zum Kugelkopf der Anhängekupplung und somit eine Winkelstellung des Anhängers relativ zum Kraftfahrzeug erfassen. Bei der zu erfassenden Winkelstellung kann es sich vorzugsweise um eine Winkellage bezüglich einer vertikalen Achse oder Z-Achse oder einer Hochachse handeln, aber auch um Winkelstellungen quer dazu.

Der Kupplungsnutzungssensor kann aber auch einen Lastsensor, zum Beispiel eine Stützlastsensor und/oder Zuglastsensor, zur Erfassung einer Belastung des Kuppelträgers durch den Anhänger oder den Lastenträger umfassen.

Weiterhin vorteilhaft ist ein Objektsensor, zum Beispiel ein optischer und/oder induktiver Sensor und/oder ein Wirbelstromsensor, zur Erfassung eines einem Kuppelträger, zum Beispiel einem Kuppelelement zum Ankuppeln des Anhängers oder des Lastenträgers, angreifenden Objekts umfasst. Das Objekt ist beispielsweise eine Zugkugelkupplung oder eine Klemmhalterung, die an der Kupplungskugel oder einem sonstigen Kuppelelement der Anhängekupplung angreift. Der mindestens eine Objektsensor ist beispielsweise ein Sensor, der das Vorhandensein einer Kupplungsvorrichtung eines Lastenträgers oder eines Anhängers sensorisch erfasst, beispielsweise als optischer Sensor, induktiver Sensor oder dergleichen. Besonders bevorzugt ist der mindestens eine Objektsensor zur Erfassung einer Schließstellung der Kupplungsvorrichtung ausgestaltet, kann also beispielsweise erfassen, ob die Kupplungsvorrichtung verschlossen oder verriegelt oder beides ist.

Ferner kann der Objektsensor oder können die objektsensoren dazu ausgestaltet sein, die geometrische Ausdehnung der Kupplungsvorrichtung zu erfassen. Wenn also beispielsweise nur der Fuß eines Bedieners den mindestens einen Objektsensor betätigt, beispielsweise verschattet, wird dies nicht als eine Nutzung der Anhängekupplung, beispielsweise der Kupplungskugel, von dem mindestens einen Objektsensor erkannt. Wenn jedoch eine einer vorbestimmten geometrischen, insbesondere flächigen oder flächenmäßigen, Ausdehnung einer Kupplungsvorrichtung entsprechende Fläche, beispielsweise ein Randbereich der Kupplungsvorrichtung oder eine Kugelpfanne oder dergleichen, von dem mindestens einen Objektsensor (es können beispielsweise mehrere Objektsensoren nebeneinander angeordnet sein) erfasst wird, wird dies vom Objektsensor oder den Objektsensoren als eine typische Nutzung der Anhängekupplung, beispielsweise der Kupplungskugel oder eines sonstigen Kuppelstücks, erfasst.

Bevorzugt umfasst der mindestens eine Kupplungsnutzungssensor, wie erwähnt, einen Beschleunigungssensor, der zur Erfassung einer Beschleunigung des Kraftfahrzeugs in Fahrzeuglängsrichtung ausgestaltet ist.

In Kombination mit dem Zuglastsignal ist hierbei eine Anhängermasse ermittelbar.

Das erfindungsgemäße Verfahren kann beispielsweise anhand einer Software realisiert werden, wobei ein Prozessor der Auswerteeinrichtung anhand der Software in der Lage ist, die erfindungsgemäßen Verfahrensschritte auszuführen. Ein anderer Aspekt der Erfindung kann vorsehen, dass die Auswerteeinrichtung ein Steuergerät des Kraftfahrzeugs ist, das anhand der vorgenannten Software in der Lage ist, das erfindungsgemäße Verfahren durchzuführen.

Die Auswerteeinrichtung kann einen Bestandteil einer Steuerung der Anhängekupplung sein, z.B. zur elektrischen Ansteuerung der Stromversorgung des Anhängers und/oder mindestens einer Funktion der Anhängekupplung. Die Funktion kann z.B. eine Ansteuerung eines Antriebsmotors zum Verstellen des Kuppelträgers zwischen der Gebrauchsstellung und der Nichtgebrauchsstellung umfassen. Die Auswerteeinrichtung kann auch dazu ausgestaltet sein, ansonsten Informationen von Sensoren der Anhängekupplung zu verarbeiten, z.B. eine Stützlast und/oder Zuglast und/oder einen Winkel zwischen Zugfahrzeug und Anhänger zu ermitteln.

Der Halter kann ein Halter sein oder umfassen, an dem der Kuppelträger lösbar befestigbar ist, insbesondere mittels einer Steckverbindung. Es ist aber auch eine bewegliche Lagerung möglich, bei welcher der Kuppelträger beispielsweise schwenkbar und/oder schiebebeweglich an dem Halter gelagert ist. Der Halter umfasst also in diesem Fall ein Schwenklager und/oder ein Schiebelager. Eine Ausführungsform kann vorsehen, dass der Kuppelträger dauerhaft an dem Halter verbleibt, somit auch im am Kraftfahrzeug montierten Zustand dem Halter dauerhaft am Kraftfahrzeug.

Bei einem Stecksystem oder einem sonstigen Befestigungssystem, bei dem der Kuppelträger lösbar an dem Halter befestigt ist, kann die erfindungsgemäße Vorgehensweise ebenfalls vorteilhaft sein, indem nämlich beispielsweise bei nicht an dem Halter befestigtem Kuppelträger (Nichtgebrauchsstellung) beispielsweise von einem an einer Trägeranordnung angeordneten Kupplungsnutzungssensor stammende Kupplungsnutzungssignale von der Auswerteeinrichtung bzw. dem Auswertemodul ausgewertet werden. Der Halter umfasst z.B. eine Steckhülse oder Steckhalterung oder einen Haltebock für den Kuppelträger oder Kuppelträger.

Es ist auch möglich, dass bei einem fest an der Trägeranordnung angeordneten Kuppelträger erfindungsgemäß vorgegangen wird, d.h. dass die Auswerteeinrichtung anhand einer logischen Verknüpfung des Elektro-Nutzungssignals und des mindestens einen Kupplungsnutzungssignals eine Störungsinformation erzeugt.

Die Trägeranordnung umfasst beispielsweise einen hinten am Heck des Kraftfahrzeugs in Fahrzeugquerrichtung verlaufenden Querträger, an dem der Halter befestigt ist. Die Trägeranordnung kann auch Seitenträger umfassen, die vom Querträger abstehen und beispielsweise seitlich an der Karosserie des Kraftfahrzeugs befestigt sind oder auch beispielsweise an den Längsträgern des Kraftfahrzeugs befestigt oder befestigbar sind.

Nachfolgend werden Ausführungsbeispiele der Erfindung anhand der Zeichnung erläutert. Es zeigen:
- Figur 1: eine perspektivische Schrägansicht einer Anhängekupplung, deren Kuppelträger in einer Gebrauchsstellung ist,
- Figur 2: die Anhängekupplung aus Figur 1 perspektivisch schräg von oben,
- Figur 3: die Anhängekupplung gemäß Figur 1, 2 mit ihrem Kuppelträger in der Nichtgebrauchsstellung,

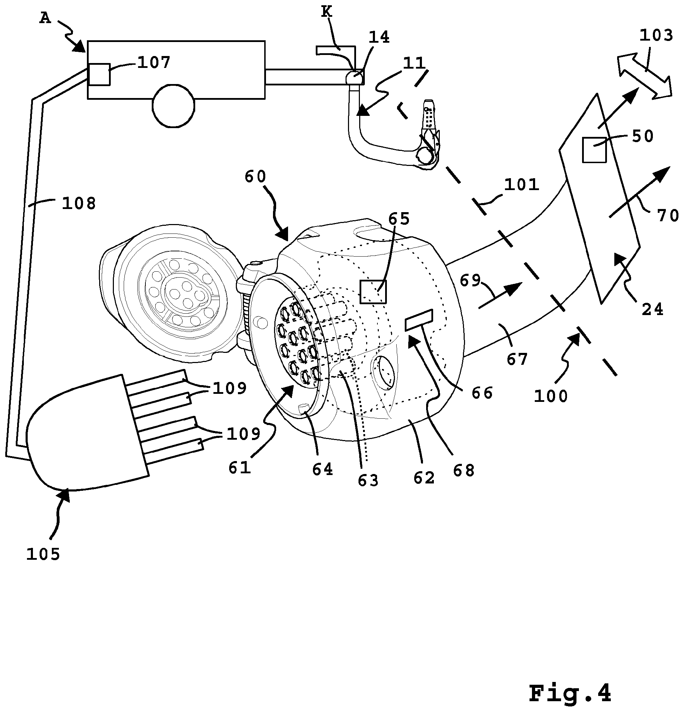

- Figur 4: eine teilweise schematische Ansicht der Anhängekupplung gemäß vorstehender Figuren und einem Anhänger,

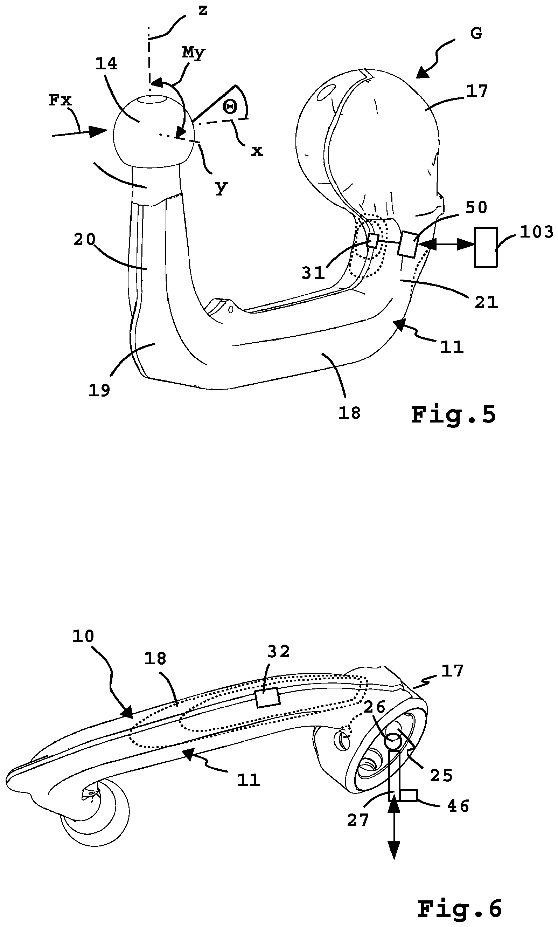

- Figur 5: eine perspektivische Schrägansicht des Kuppelträgers der Anhängekupplung gemäß Figur 1 von oben,
- Figur 6: eine Ansicht von schräg unten auf den Kuppelträger gemäß Figur 1, 2,

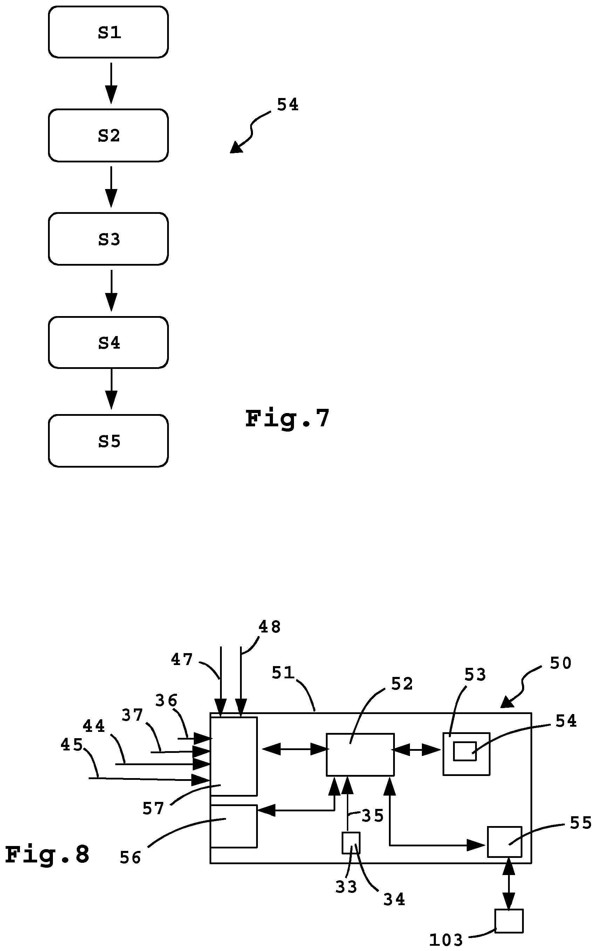

- Figur 7: ein Ablaufdiagramm des Verfahrens gemäß der Erfindung,
- Figur 8: ein Blockschaltbild einer Auswerteeinrichtung der Anhängekupplung gemäß Figuren 1-3,
- Figur 9: ein alternatives Kuppelelement für die Anhängekupplung gemäß Figuren 1-3 mit einem Winkelsensor und einer Anordnung von mehreren Objektsensoren.

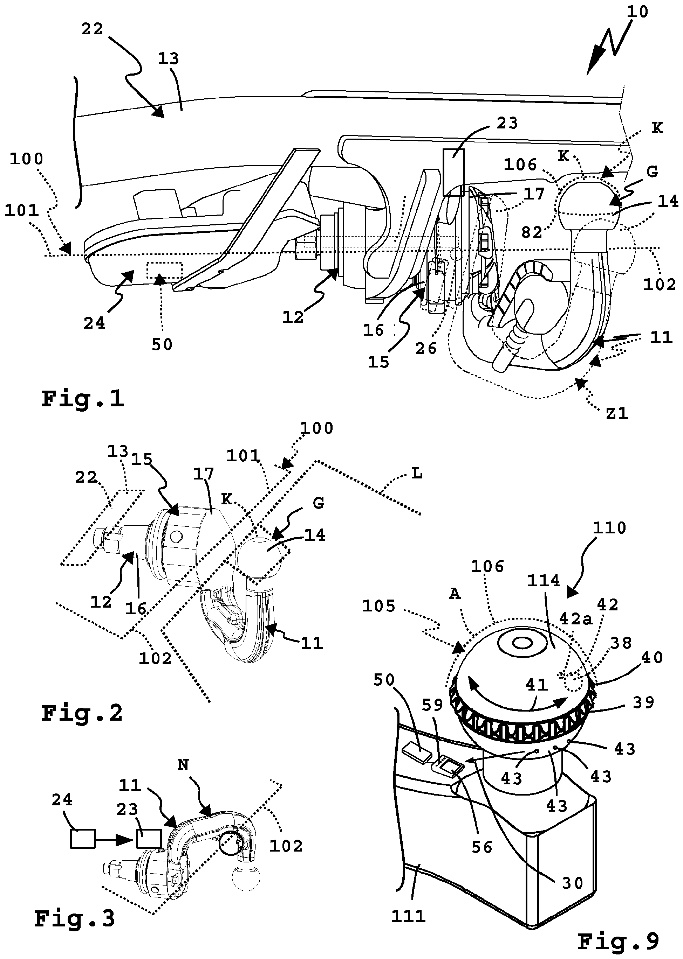

Eine Anhängekupplung 10 umfasst einen Kuppelträger 11, der an einem Halter 12 beweglich zwischen einer in Figur 1 dargestellten Gebrauchsstellung G und einer in Figur 2 dargestellten Nichtgebrauchsstellung N gelagert ist, zwischen denen beispielsweise eine Zwischenstellung Z1 liegt. Der Halter 12 umfasst beispielsweise ein Lager 15, z.B. ein Schwenklager, ein Schiebelager oder eine Kombination davon (Schwenk-Schiebelager).

Der Halter 12 ist an einem Querträger 13 einer Trägeranordnung 22 befestigt, der seinerseits wiederum am Heck 101 eines Kraftfahrzeugs 100 befestigt ist. Vom Querträger 13 können Seitenträger abstehen, die beispielsweise seitlich an einer Karosserie (nicht dargestellt) oder an Längsträgern des Kraftfahrzeugs 100 befestigt sind. In der Gebrauchsstellung G steht der Kuppelträger 11 nach hinten vor einen Stoßfänger 102 des Kraftfahrzeugs 100 vor, so dass er zum Gebrauch bereitsteht, beispielsweise zur Befestigung eines Lastenträgers L. In der Nichtgebrauchsstellung N hingegen ist der Kuppelträger 11 nicht zum Ankuppeln eines Anhängers oder Lastenträgers bereit, beispielsweise ganz oder im Wesentlichen hinter den Stoßfänger 102 verborgen.

Das Kraftfahrzeug 100 ist beispielsweise ein Personenkraftwagen mit einem Verbrennungsmotor und/oder einem Elektromotor.

Der Lastenträger L umfasst beispielsweise eine Klemmvorrichtung oder Kupplungsvorrichtung K zum Ankuppeln an ein Kuppelelement 14, zum Beispiel eine Kupplungskugel, der Anhängekupplung 10. Das Lager 15 umfasst eine am Querträger 13 befestigte Lagerbasis 16, an der ein Lagerelement 17 beweglich gelagert ist. Vom Lagerelement 17 steht ein Armabschnitt 18 des Kuppelträgers 11 beispielsweise anhand eines Krümmungsabschnitts 21 oder dergleichen ab. Vom Armabschnitt 18 erstreckt sich ein Krümmungsabschnitt 19 nach oben, wobei oben am Krümmungsabschnitt 19 wiederum ein Armabschnitt 20 angeordnet ist, an dem das Kuppelelement 14, zum Beispiel die Kupplungskugel, befestigt ist.

Diese Krümmungen des Kuppelträgers sind aber nicht unbedingt notwendig, was im Ausführungsbeispiel gemäß Figur 9 deutlich wird, d.h. dass beispielsweise auch winkelige oder nicht winkelige Verläufe oder nicht gekrümmte Verläufe eines Kuppelträgers ohne weiteres möglich sind.

Am Krümmungsabschnitt 21 ist ein Kupplungsnutzungssensor 31 angeordnet, beispielsweise ein Kraftsensor, der an dem Krümmungsabschnitt 21 angreifende Kräfte, beispielsweise Biegekräfte, Torsionskräfte oder dergleichen misst, wenn das Kuppelelement 14 durch beispielsweise den Lastenträger L belastet ist. Ein weiterer Kupplungsnutzungssensor 32 ist beispielsweise unten am Armabschnitt 18 angeordnet.

In gestrichelten Linien ist im Bereich der beiden Kupplungsnutzungssensoren 31 und 32 jeweils ein Kraftverlauf eingezeichnet, der durch die Belastung des Kuppelträgers 11 durch Stützlast oder Zuglast auftreten kann. Die beiden Kraftsensoren oder Kupplungsnutzungssensoren 31, 32 messen beispielsweise Kraftkomponenten einer Stützlast, die in Z-Richtung auf das Kuppelelement 14 wirkt und/oder Kraftkomponenten einer in Fahrzeuglängsrichtung wirkenden Zuglast Fx.

Bei den Kupplungsnutzungssensoren 31, 32 handelt es sich beispielsweise um Dehnungsmessstreifen. Aber auch induktiv oder kapazitiv eine jeweilige Belastung des Kuppelträgers 11 messende Kupplungsnutzungssensoren oder Kraftmessungssensoren sind ohne weiteres möglich.

Die Kupplungsnutzungssensors 31, 32 erzeugen beispielsweise Kraftsignale, die eine Belastung bzw. eine Zustandsänderung der Dehnungsmessstreifen oder Kupplungsnutzungssensoren 31, 32 signalisieren. Die Kraftsignale bilden Kupplungsnutzungssignale 36, 37, die eine Nutzung des Kuppelträgers 11 signalisieren.

An dem Kuppelträger 11 ist weiterhin ein Beschleunigungssensor 33 angeordnet, der zur Messung von in X-Richtung, Y-Richtung und Z-Richtung wirkenden Kraftkomponenten und/oder Beschleunigungen ausgestaltet ist. Der Beschleunigungssensor 33 kann beispielsweise die in Fahrzeuglängsrichtung wirkende Beschleunigung ax messen und als ein Beschleunigungssignal 49 an eine Auswerteeinrichtung 50 melden.

Der Beschleunigungssensor 33 umfasst oder bildet zugleich einen Lagesensor 34, der die Lage des Kuppelträgers 11 erfassen kann, wobei der Lagesensor 34 ein Gebrauchsstellungssignal 35 erzeugt, das beispielsweise in der Gebrauchsstellung G einen Gebrauchsstellungswert und in der Nichtgebrauchsstellung N einen Nichtgebrauchsstellungswert umfasst.

Die Auswerteeinrichtung 50 umfasst beispielsweise ein Gehäuse 51, in welchem ein Prozessor 52 sowie einen Speicher 53 angeordnet ist. In dem Speicher 53 ist ein Auswertemodul 54 gespeichert, dessen Programmcode vom Prozessor 52 ausführbar ist. Der Beschleunigungssensor 33 befindet sich z.B. an Bord der Auswerteeinrichtung 50. Es ist auch möglich, dass ein Beschleunigungssensor in der Art des Beschleunigungssensors 33 beispielsweise direkt am Kuppelträger 11 angeordnet ist.

Eine Ausführungsform der Erfindung sieht z.B. vor, dass die Auswerteeinrichtung 50 direkt am Kuppelträger 11 angeordnet ist, beispielsweise in der Art wie in Figur 9 dargestellt. Somit ist auch beispielsweise eine Anzeigeeinrichtung 56 gut sichtbar, mit der die Auswerteeinrichtung 50 von den Kupplungsnutzungssignalen 36, 37 abhängige Betriebszustände, beispielsweise eine Stützlast, eine Zuglast oder dergleichen anzeigen kann. Die Auswerteeinrichtung 50 ist nämlich in der Lage, eine Masse eines Anhängers oder des Lastenträgers L zu ermitteln, insbesondere unter Berücksichtigung der Signale des Beschleunigungssensors 33 .

Ferner kann die Auswerteeinrichtung 50 auch eine Störungsinformation 58 ausgeben, z.B. optisch an der Anzeigeeinrichtung 56 und/oder akustisch mittels eines Lautsprechers 59.

Es ist selbstverständlich auch möglich, dass die Auswerteeinrichtung 50 an Bord des Kraftfahrzeugs 100 ist und beispielsweise über Funk, über Leitungen oder dergleichen mit beispielsweise dem Kupplungsnutzungssensor und 31, 32 sowie dem Lagesensor 34, also dem Gebrauchsstellungssensor, kommuniziert.

Weiterhin hat die Auswerteeinrichtung 50 eine Datenschnittstelle 55 zur Kommunikation mit einem Bordnetz 103 des Kraftfahrzeugs 100. Die Datenschnittstelle 55 umfasst beispielsweise eine Funk-Schnittstelle oder auch eine leitungsgebundene Schnittstelle. Bevorzugt umfasst die Datenschnittstelle eine Bus-Schnittstelle zur Kommunikation mit einem fahrzeugseitigen Datenbus, zum Beispiel einem CAN-Bus.

Die Auswerteeinrichtung 50 kann die Störungsinformation 58 auch an der Datenschnittstelle 55 ausgeben, z.B. in Gestalt eines Bustelegramms 70 auf einem Datenbus des Kraftfahrzeugs.

In Figur 9 ist an einem Kuppelträger 111 einer Anhängekupplung 110 ein Kuppelelement 114 angeordnet, das einen Winkelsensor 42 umfasst, der einen weiteren Kupplungsnutzungssensor 38 darstellen kann. Anstelle des Kuppelelements 14 könnte also auch das Kuppelelement 114 am Kuppelträger 11 der Anhängekupplung 10 befestigt sein.

Der Winkelsensor 42 wird von einem Sensorgeber 39 betätigt. Der Sensorgeber 39 umfasst beispielsweise einen Ring 40, der vorzugsweise im Bereich des Äquators des als Kupplungskugel ausgestalteten Kuppelelements 114 angeordnet ist. Der Ring 40 ist drehbar am Kuppelelement 114 gelagert, so dass er von einem Anhänger A mitgenommen werden kann, wenn sich dieser relativ zum Kraftfahrzeug 100 dreht, beispielsweise bei einer Kurvenfahrt. Dies ist durch eine Drehbewegung 41 in der Zeichnung angedeutet. An dem Sensorgeber 39 sind beispielsweise optische Geber, zum Beispiel Schwarz-Weiß-Markierungen, Gebermagnete oder dergleichen angeordnet, um den Winkelsensor 42 zu betätigen, der zum Beispiel einen optischen Sensor und/oder einen magnetischen Sensor, insbesondere einen induktiven Sensor umfasst.

Es ist auch möglich, dass der Winkelsensor 42 (es können auch mehrere Winkelsensoren vorgesehen sein) berührungslos eine jeweilige Stellung der Anhängers A relativ zum Kraftfahrzeug oder Kraftfahrzeug 100 erfasst. Es ist zum Beispiel möglich, dass der Winkelsensor 42 ein optischer Sensor ist, der eine Relativposition einer Kupplungs-Aufnahme 106 oder Kugelpfanne einer Kupplungsvorrichtung K erfasst.

Der Winkelsensor 42 oder die Winkelsensoren 42 können auch induktive Sensoren sein, die eine Änderung eines magnetischen Flusses erfassen können, der beispielsweise durch einen oder mehrere Magnete an der Kupplung K oder der Kupplungs-Aufnahme 106 bewirkt wird. Besonders bevorzugt ist eine Anordnung, dass der oder die Winkelsensoren 42 induktive Sensoren sind, die einen Erzeuger 42a zur Erzeugung eines magnetischen Flusses an Bord haben oder jedenfalls mit einem an Bord der Anhängekupplung 10 vorhandenen Erzeuger 42a zusammen wirken. Der Erzeuger 42a erzeugt ein magnetisches Feld, beispielsweise wenn er als Permanentmagnet oder Elektro-Magnet ausgestaltet ist. Die Änderung des Feldes des Erzeugers 42a durch die Kupplungsvorrichtung K ist durch den Winkelsensor 42 erfassbar.

Der Winkelsensor 42 sendet beispielsweise ein Winkelsignal 45 an die Auswerteeinrichtung 50. Das Winkelsignal 45 dient zur Ermittlung eines Kupplungsnutzungssignals 44, das eine Nutzung des Kuppelträgers 11 signalisiert. Der Kupplungsnutzungssensor 38 sendet das Winkelsignal 45 beispielsweise das Kupplungsnutzungssignal 44 an die Auswerteeinrichtung 50.

An dem Kuppelelement 114 sind weiterhin Objektsensoren 43 angeordnet, beispielsweise optische Sensoren, die durch die Kupplungsvorrichtung K des Lastenträgers L oder auch durch beispielsweise eine Schließbacke einer Zugkugelkupplung des Anhängers A betätigbar sind und somit eine Nutzung des Kuppelelements 114 durch ein an diesem angreifendes Objekt, nämlich den Anhänger A oder den Lastenträger L, signalisieren.

Die Auswerteeinrichtung hat eine Sensorschnittstelle 57 zum Empfang beispielsweise der Kupplungsnutzungssignale 36, 37, 44.

Der Kuppelträger 11, 111 ist beispielsweise durch einen Antrieb 23, zum Beispiel einen Elektromotor, zwischen der Gebrauchsstellung G und der Nichtgebrauchsstellung N verstellbar. Der Antrieb 23 wird von einer Steuerungseinrichtung 24 angesteuert, der sozusagen z.B. anhand eines Stromwerts eines Stroms zum Betreiben des Antriebs 23 weiß, welche Stellung der Kuppelträger 11 einnimmt. Die jeweiligen Endlagen entsprechen nämlich der Gebrauchsstellung G und der Nichtgebrauchsstellung N.

Die Steuerungseinrichtung 24 erzeugt ein Antriebssignal 47, das die jeweilige Stellung G oder N repräsentiert und somit ein Gebrauchsstellungssignal darstellt.

Eine weitere Variante wird im Zusammenhang mit einer Verriegelung des Kuppelträgers 11 in der Gebrauchsstellung G und oder der Nichtgebrauchsstellung N deutlich. Beispielsweise ist mindestens ein Formschlusselement 26 in mindestens eine Formschlussaufnahme 25 am Lagerelement 17 hinein verstellbar, um dieses ortsfest in der Gebrauchsstellung G und/oder der Nichtgebrauchstellung N fest zu legen, also zu fixieren oder zu verriegeln. Ein Verriegelungssensor 46 erfasst die jeweilige Stellung des Formschlusselements 26, d.h. ob dieses den Kuppelträger 11 verriegelt oder nicht. Der Verriegelungssensor 46 erzeugt in Abhängigkeit von der (Verriegelungs-)Stellung des Formschlusselements 26 oder eines dieses betätigenden Betätigungselements 27 ein Verriegelungssignal 48, so dass aus dem Verriegelungssignal 48, das die Auswerteeinrichtung 50 empfängt, ermittelbar ist, ob der Kuppelträger 11, 111 verriegelt ist und somit beispielsweise die Gebrauchsstellung G oder die Nichtgebrauchsstellung N einnimmt.

An dem Kuppelträger 11 oder auch seitlich neben dem Kuppelträger 111, beispielsweise an der Trägeranordnung 22, ist eine Stromversorgungseinrichtung 60 vorgesehen. Die Stromversorgungseinrichtung 60 ist beispielsweise über eine Anschlussleitung 67 mit dem Bordnetz 103 des Kraftfahrzeugs 100 verbunden. Die Anschlussleitung 67 kann beispielsweise über ein Steuergerät der Anhängekupplung 10 führen oder von dieser bereitgestellt werden. Im vorliegenden Fall ist jedenfalls eine zumindest datentechnische Verbindung zwischen der Anschlussleitung 67 und der Auswerteeinrichtung 50 vorgesehen.

In die Stromversorgungseinrichtung 60, die beispielsweise als Steckverbinder 61 ausgestaltet ist, kann ein Stecker 105 des Anhängers A eingesteckt werden. Der Stecker 105 versorgt dann über eine Leitung 108 ein Bordnetz 107 des Anhängers A, beispielsweise dessen Beleuchtungsanlage oder dergleichen. Der Steckverbinder oder Stecker 105 weist beispielsweise elektrische Kontakte 109, beispielsweise Steckvorsprünge, auf, die mit elektrischen Kontakten 63 der Stromversorgungseinrichtung 60 eine elektrische Verbindung eingehen können. Die Kontakte 63 sind beispielsweise als Steckbuchsen ausgestaltet. Sie befinden sich in einem Gehäuse 62 der Stromversorgungseinrichtung 60 bzw. Steckverbinders 61.

Am Gehäuse 62 ist beispielsweise ein Sensor 64 in Gestalt eines Tasters vorgesehen, der durch den Stecker 105 betätigbar ist. Wenn also der Stecker 105 in den Steckverbinder 61 eingesteckt wird, wird der Sensor 64 betätigt und erzeugt dann ein Elektro-Nutzungssignal 69, welches eine Nutzung der Stromversorgungseinrichtung 60 durch den Anhänger A, konkret dessen Stecker 105, signalisiert.

Anstelle des z.B. als Tastschalter ausgestalteten Sensors 64 oder zusätzlich zu diesem kann auch beispielsweise ein induktiver oder kapazitiver Sensor 64 vorgesehen sein, der durch die Kontakte 109 oder beispielsweise auch einen Magneten an Bord des Steckers 105 betätigbar ist. Der Sensor 64 bildet ebenso wie ein weiterer, alternativ oder ergänzend möglicher Strom- oder Stromkreis-Sensor 66 einen Bestandteil einer Elektro-Nutzungssensoranordnung 68. Der Sensor 66 kann beispielsweise signalisieren, dass ein Stromkreis, der vom Steckverbinder 61 über das Bordnetz 107 des Anhängers A führt, geschlossen ist. Der Sensor 66 kann beispielsweise einen Stromfluss ermitteln, aber auch das Vorhandensein einer elektrischen Kontaktierung zwischen Steckverbinder 61 und Stecker 105 bzw. Bordnetz 107.

Die Sensoren 64, 65, 66 erzeugen jeweils ein Elektro-Nutzungssignal 69, wenn die Stromversorgungseinrichtung 60 durch den Anhänger A genutzt wird.

Diese Information, also das mindestens eine Elektro-Nutzungssignal 69, wird von dem nachfolgend erläuterten Auswertemodul 54, das einen Bestandteil der Auswerteeinrichtung 50 bildet, ebenso wie die bereits erläuterten Kupplungsnutzungssignale 30, 36, 37, 44 ausgewertet.

In einem Schritt S1, sozusagen einer Initialisierungsphase, ermittelt das Auswertemodul 54 beispielsweise, ob das Kraftfahrzeug 100 gestartet ist oder nicht.

In einem Schritt S2 stellt das Auswertemodul 54 beispielsweise fest, dass die Anhängekupplung 10 ihre Nichtgebrauchsstellung N einnimmt, zum Beispiel anhand des Antriebssignals 47 und/oder des Verriegelungssignals 48 und/oder des vom Lagesensor 34 erzeugten Lagesignals bzw. Gebrauchsstellungssignals 35.

In dieser Phase werden die Kupplungsnutzungssensoren 31, 32, 38 sozusagen initialisiert. Beispielsweise wird hier eine Nulllage oder Ausgangslage festgelegt. In diesem Zustand ist auch ermittelbar, ob der Kuppelträger 11 unbeschädigt ist. Die Kraftsensoren, nämlich die Kupplungsnutzungssensoren 31, 32 sind hier nämlich in einem Startzustand, der einen unbeschädigten Kuppelträger 11 signalisieren soll. Auch eine Selbstdiagnose beispielsweise der Elektronik der Auswerteeinrichtung 50 ist in diesem Zustand vorteilhaft.

Weiterhin sind im Zustand S2 auch Startwerte festlegbar, d.h. dass beispielsweise ein Temperaturabgleich stattfindet, eine Tara von der Auswerteeinrichtung 50 berechnet wird oder dergleichen.

In einem Schritt S3 ermittelt das Auswertemodul 54 beispielsweise anhand eines Zustandswechsels des Antriebssignals 47 und/oder des Verriegelungssignals 48 oder auch anhand des Gebrauchsstellung des Gebrauchsstellungssignals 35, dass der Kuppelträger 11 von der Nichtgebrauchsstellung N in die Gebrauchsstellung G verstellt worden ist. Gerade in dieser ersten Phase, bei der jedenfalls noch keine Belastung des Kuppelträgers 11 durch ein Objekt, beispielsweise den Anhänger A und/oder den Lastenträger L, zu erwarten ist, ist es vorteilhaft, wenn die Kupplungsnutzungssensoren 31, 32 initialisiert werden.

Wenn dann in einem Schritt S4 eine Last an dem Kuppelträger 11 angreift, zum Beispiel der Lastenträger L montiert und/oder die Anhängekupplung A angekuppelt wird, ermittelt das Auswertemodul 54 beispielsweise zunächst eine Stützlast, die am Kuppelelement 14 angreift.

In diesem Zusammenhang, also beispielsweise noch im Schritt S4, ermittelt das Auswertemodul 54 bzw. die Auswerteeinrichtung 50 eine Masse des Anhängers A, z.B. anhand von Beschleunigung und an der Anhängekupplung angreifender Zug- oder Schublast.

Die Auswerteeinrichtung 50 meldet beispielsweise nur dann, wenn die Objektsensoren 43 signalisieren, dass das Kuppelelement 14 durch beispielsweise die Kupplungsvorrichtung K benutzt ist und das Gebrauchsstellungssignal 35 die Gebrauchsstellung G signalisiert, an das Bordnetz 103, dass die Anhängekupplung 10 genutzt wird. Auch hier meldet also die Auswerteeinrichtung 50 den Kupplungsnutzungszustand des Kuppelträgers 11 in Abhängigkeit von dessen Lage in der Gebrauchsstellung oder der Nichtgebrauchsstellung. Die Objektsensoren 43 stellen ebenfalls Kupplungsnutzungssignale 30 bereit, wenn sie ermitteln, dass die Kupplungsvorrichtung K des Lastenträgers L oder Anhängers A angekuppelt ist.

Die Auswerteeinrichtung 50 wertet beispielsweise nur dann das Winkelsignal 45 des Winkelsensors 42 aus, wenn der Kuppelträger 11 die Gebrauchsstellung G einnimmt. Wenn sich also beispielsweise der Ring 40 in der Nichtgebrauchsstellung N dreht, wird das entsprechende Winkelsignal nicht an das Bordnetz 103 weitergegeben oder an der Anzeigeeinrichtung 56 ausgegeben, während die Auswerteeinrichtung 50 in der Gebrauchsstellung G das Winkelsignal ausgibt.

In einem Schritt S5 stellt die Auswerteeinrichtung 50 fest, ob das Gespann bestehend aus Zugfahrzeug oder Kraftfahrzeug 100 und Anhänger A zuverlässig miteinander gekoppelt ist. Wenn nämlich beispielsweise eines oder mehrere der vorgenannten Kupplungsnutzungssignale 36, 37, 30, 44 eine Nutzung der Anhängekupplung 10 durch den Anhänger A oder Lastenträger L signalisiert, andererseits jedoch mindestens eines der Elektro-Nutzungssignale 69 signalisiert, dass die Stromversorgungseinrichtung 60 durch den Lastenträger L oder Anhänger A nicht genutzt wird, erzeugt die Auswerteeinrichtung 50 die Störungsinformation 58.

Die Störungsinformation 58 gibt die Auswerteeinrichtung 50 beispielsweise als Bustelegramm 70 (CAN-Bus etc.) an das Bordnetz 103 weiter. Beispielsweise im Cockpit oder an einer anderen Stelle des Kraftfahrzeugs 100 wird deine die Störungsinformation 58 ausgegeben, beispielsweise als Warnmeldung, als Klartextinformation im Bordcomputer des Kraftfahrzeugs 100 oder dergleichen. Alternativ oder ergänzend ist es auch möglich, dass die Störungsinformation 58 beispielsweise am Lautsprecher 59 und/oder der Anzeigeeinrichtung 56 ausgegeben wird.

Aber auch der Fall, dass das Elektro-Nutzungssignal oder eines der Elektro-Nutzungssignale 69 eine Nutzung der Stromversorgungseinrichtung 60 signalisieren, während beispielsweise die Objektsensoren 43 feststellen, dass eben gerade keine Kupplungsvorrichtung K an die Anhängekupplung 10 angekuppelt ist oder beispielsweise auch die Lastsensoren 31, 32 ermitteln, dass die Stützlast oder Zuglast nicht ausreichend groß ist, also keine Last repräsentieren, die vom Lastenträger L oder Anhänger A herrührt, wird von der Auswerteeinrichtung 50 als Störung identifiziert und führt zu der Störungsinformation 58.

Es ist auch möglich, dass die Auswerteeinrichtung 50 anstelle der Kupplungsnutzungssignale 30 und/oder 36 und/oder 37 und/oder 44 beispielsweise anhand des Verriegelungssignals 48 oder auch Signals des Lagesensor 34, des Gebrauchsstellungssignals 35, eine Störungsinformation oder die Störungsinformation 58 generieren. Wenn nämlich zum einen das Gebrauchsstellungssignal 35 und/oder das Verriegelungssignal 48 die Nichtgebrauchstellung N signalisierende, andererseits jedoch die Stromversorgungseinrichtung 60 genutzt wird, also mindestens eines der Elektro-Nutzungssignal 69 deren Nutzung signalisieren, liegt jedenfalls eine Störung vor, die von der Auswerteeinrichtung 50 ermittelt wird. Es darf nämlich nicht sein, dass die Steckdose bzw. der Steckverbinder 61 elektrisch genutzt wird, die Anhängekupplung jedoch nicht zuverlässig die Gebrauchsstellung G einnimmt.

Vorteilhaft ist auch eine Verknüpfung der vorgenannten Informationen, d.h. dass beispielsweise die Auswerteeinrichtung 50 nur dann die Störungsinformation 58 generiert, wenn zum einen die Gebrauchsstellung G erreicht ist, zum andern mindestens eines der Elektro-Nutzungssignal 69 die Nutzung der Stromversorgungseinrichtung 60 durch den Anhänger A signalisiert und dann zusätzlich festgestellt wird, dass eines oder mehrere der Kupplungsnutzungssignale 36 negativ ist, das heißt dass beispielsweise der Anhänger A oder Lastenträger L nicht zuverlässig an die Anhängekupplung 10 angekuppelt ist, diese nicht ausreichend belastet etc..

## Patentansprüche

1. Anhängekupplung (10; 110) für ein Kraftfahrzeug, insbesondere einen Personenkraftwagen, wobei die Anhängekupplung (10; 110) einen Kuppelträger (11; 111), an dem ein Kuppelelement (14; 114) zum Ankuppeln eines Anhängers (A) angeordnet ist, umfasst, wobei die Anhängekupplung (10; 110) mindestens einen Kupplungsnutzungssensor (31-33) zur Erfassung mindestens eines von einer Nutzung des Kuppelträgers (11; 111) abhängigen Kupplungsnutzungszustandes, insbesondere einer Winkelstellung des Anhängers (A) oder des Lastenträgers (L) relativ zu dem Kuppelträger (11; 111) und/oder einer mechanischen Belastung des Kuppelträgers (11; 111) durch den Anhänger (A) oder den Lastenträger (L), und zur Ausgabe mindestens eines den Kupplungsnutzungszustand repräsentierenden Kupplungsnutzungssignals (30, 36, 37, 44) aufweist, und wobei die Anhängekupplung (10; 110) eine Stromversorgungseinrichtung (60) zur elektrischen Stromversorgung des Anhängers (A) aufweist, wobei die Stromversorgungseinrichtung (60) eine Elektro-Nutzungssensoranordnung (68) zur Erzeugung eines Elektro-Nutzungssignals (69) in Abhängigkeit von einer Nutzung der Stromversorgungseinrichtung (60) durch den Anhänger (A) aufweist, **dadurch gekennzeichnet, dass**
sie eine Auswerteeinrichtung (50) aufweist, welche anhand einer logischen Verknüpfung des Elektro-Nutzungssignals (69) und des mindestens einen Kupplungsnutzungssignals (30, 36, 37, 44) eine Störungsinformation (58) erzeugt, und dass die Auswerteeinrichtung (50) in der Störungsinformation (58) einen Fehler signalisiert, wenn das Elektro-Nutzungssignal (69) keine Nutzung der Stromversorgungseinrichtung (60) anzeigt und das Kupplungsnutzungssignal (30, 36, 37, 44) eine Nutzung der Anhängekupplung (10; 110) durch einen Anhänger (A) oder Lastenträger (L) signalisiert.

2. Anhängekupplung (10; 110) nach Anspruch 1, **dadurch gekennzeichnet, dass** der mindestens eine Kupplungsnutzungssensor (31-33) eine an mindestens einem Trageelement der Anhängekupplung (10; 110), insbesondere dem Kuppelträger (11; 111), eine Belastungssensor-Anordnung zur Erzeugung mindestens eines Lastsignals in Abhängigkeit von einer mechanischen Belastung, insbesondere einer Stützlast oder Zuglast, der Anhängekupplung (10; 110), insbesondere des Kuppelelements (14; 114), umfasst, wobei das Kupplungsnutzungssignal (30, 36, 37, 44) anhand des mindestens einen Lastsignals gebildet ist.

3. Anhängekupplung (10; 110) nach Anspruch 2, **dadurch gekennzeichnet, dass** die mechanische Belastung eine Stützlast und/oder eine Zuglast umfasst und/oder dass das Kupplungsnutzungssignal (30, 36, 37, 44) eine Nutzung der Anhängekupplung (10; 110) bei Überschreitung eines Schwellwerts der mechanischen Belastung signalisiert.

4. Anhängekupplung nach Anspruch 2 oder 3, **dadurch gekennzeichnet, dass** das mindestens eine Lastsignal oder das Kupplungsnutzungssignal (30, 36, 37, 44) eine logische Verknüpfung mindestens zweier Last-Sensorinformationen, insbesondere Belastungen des Kuppelträgers (11; 111) in unterschiedlichen Kraftrichtungen signalisierende Last-Sensorinformationen oder redundante Last-Sensorinformationen, oder eine logische Verknüpfung einer Last-Sensorinformationen mit einem weiteren eine Nutzung der Anhängekupplung (10; 110) signalisierenden Kupplungsnutzungssignals (30, 36, 37, 44) umfasst.

5. Anhängekupplung nach einem der Ansprüche 2 bis 4, **dadurch gekennzeichnet, dass** die zu verknüpfenden Last-Sensorinformationen ein Stützlastsignal und ein Zuglastsignal umfassen, so dass nur bei einer Überschreitung eines Stützlast-Schwellwerts und eines Zuglast-Schwellwerts das mindestens einen Lastsignal eine mechanische Verbindung zwischen dem Anhänger (A) und dem Kraftfahrzeug signalisiert.

6. Anhängekupplung nach einem der vorhergehenden Ansprüche, **dadurch gekennzeichnet, dass** der mindestens eine Kupplungsnutzungssensor (31-33) mindestens einen Objektsensor (43), insbesondere einen optischen und/oder induktiven Sensor und/oder einen Wirbelstromsensor, zur Erfassung eines einem Kuppelträger (11; 111) oder Kuppelelement (14; 114) Ankuppeln des Anhängers (A) oder des Lastenträgers (L) angreifenden Objekts umfasst.

7. Anhängekupplung nach Anspruch 6, **dadurch gekennzeichnet, dass** der mindestens eine Objektsensor (43) zur Erfassung einer Schließstellung der Kupplungsvorrichtung und/oder zur Erfassung einer geometrischen Ausdehnung der Kupplungsvorrichtung ausgestaltet ist.

8. Anhängekupplung nach einem der vorhergehenden Ansprüche, **dadurch gekennzeichnet, dass** die Auswerteeinrichtung (50) in der Störungsinformation (58) einen Fehler signalisiert, wenn das Elektro-Nutzungssignal (69) eine Nutzung der Stromversorgungseinrichtung (60) anzeigt und das Kupplungsnutzungssignal (30, 36, 37, 44) keine Nutzung der Anhängekupplung (10; 110) durch einen Anhänger (A) oder Lastenträger (L) signalisiert.

9. Anhängekupplung nach einem der vorhergehenden Ansprüche, **dadurch gekennzeichnet, dass** die Nutzungssensoranordnung einen optischen Sensor und/oder induktiven Sensor und/oder kapazitiven Sensor zur Erfassung, ob ein Steckverbinder des Anhängers (A) in einen Steckverbinder (61) der Stromversorgungseinrichtung (60) der Anhängekupplung (10; 110) eingesteckt ist, umfasst und/oder dass die Nutzungssensoranordnung (64) eine Sensoranordnung zur Erfassung, ob die Stromversorgungseinrichtung (60) der Anhängekupplung (10; 110) mit einem Stromkreis des Anhängers (A) verbunden ist.

10. Anhängekupplung nach einem der vorhergehenden Ansprüche, **dadurch gekennzeichnet, dass** der Kuppelträger (11; 111) an einem Halter (12), der an dem Kraftfahrzeug (100) befestigt oder befestigbar ist, zwischen einer Gebrauchsstellung, in welcher der Kuppelträger (11; 111) nach hinten vor ein Heck (101) des Kraftfahrzeugs (100) zum Ankuppeln eines Anhängers (A) oder eines Lastenträgers (L) vorsteht, und einer Nichtgebrauchsstellung (N) verstellbar ist, in welcher der Kuppelträger (11; 111) von dem Halter (12) entfernt oder näher zu dem Kraftfahrzeug (100) hinbewegt ist, und dass die Auswerteeinrichtung (50) eine oder die Störungsinformation (58) anhand einer logischen Verknüpfung eines Gebrauchsstellungssignals (35), das in der Gebrauchsstellung (G) einen Gebrauchsstellungswert und in der Nichtgebrauchsstellung (N) einen Nichtgebrauchsstellungswert aufweist, mit dem Elektro-Nutzungssignal (69) erzeugt.

11. Anhängekupplung nach Anspruch 10, **dadurch gekennzeichnet, dass** die Auswerteeinrichtung (50) die Störungsinformation (58) anhand einer logischen Verknüpfung des Gebrauchsstellungssignals (35) mit dem Elektro-Nutzungssignal (69) und dem mindestens einen Kupplungsnutzungssignal (30, 36, 37, 44) erzeugt.

12. Elektrische Überwachungseinrichtung als Bestandteil eines Steuergeräts oder einer Sensoranordnung für eine Anhängekupplung (10; 110) für ein Kraftfahrzeug, insbesondere einen Personenkraftwagen, wobei die Anhängekupplung (10; 110) einen Kuppelträger (11; 111), an dem ein Kuppelelement (14; 114) zum Ankuppeln eines Anhängers (A) angeordnet ist, umfasst und an mindestens einem Trageelement der Anhängekupplung, insbesondere dem Kuppelträger (11; 111), eine Belastungssensor-Anordnung zur Erzeugung mindestens eines Lastsignals in Abhängigkeit von einer durch den angehängten Anhänger (A) verursachten mechanischen Belastung, insbesondere einer Stützlast oder Zuglast, vorgesehen ist, und wobei die Anhängekupplung eine Stromversorgungseinrichtung (60) zur elektrischen Stromversorgung des Anhängers (A) aufweist, wobei die Stromversorgungseinrichtung (60) eine Nutzungssensoranordnung zur Erzeugung eines Elektro-Nutzungssignals (69) in Abhängigkeit von einer Nutzung der Stromversorgungseinrichtung (60) durch den Anhänger (A) aufweist, **dadurch gekennzeichnet, dass** sie eine Auswerteeinrichtung (50) aufweist, welche anhand einer logischen Verknüpfung des Elektro-Nutzungssignals (69) und des mindestens einen Lastsignals eine Störungsinformation (58) erzeugt, und dass die Auswerteeinrichtung (50) in der Störungsinformation (58) einen Fehler signalisiert, wenn das Elektro-Nutzungssignal (69) keine Nutzung der Stromversorgungseinrichtung (60) anzeigt und das Kupplungsnutzungssignal (30, 36, 37, 44) eine Nutzung der Anhängekupplung (10; 110) durch einen Anhänger (A) oder Lastenträger (L) signalisiert.

13. Anhängekupplung nach Anspruch 12, **dadurch gekennzeichnet, dass** die Belastungssensor-Anordnung und/oder die Nutzungssensoranordnung einen Bestandteil der Überwachungseinrichtung bilden.

14. Verfahren für eine Anhängekupplung für ein Kraftfahrzeug, insbesondere einen Personenkraftwagen, wobei die Anhängekupplung (10; 110) einen Kuppelträger (11; 111), an dem ein Kuppelelement (14; 114) zum Ankuppeln eines Anhängers (A) angeordnet ist, umfasst, wobei die Anhängekupplung mindestens einen Kupplungsnutzungssensor (31-33) zur Erfassung mindestens eines von einer Nutzung des Kuppelträgers (11; 111) abhängigen Kupplungsnutzungszustandes, insbesondere einer Winkelstellung des Anhängers (A) oder des Lastenträgers (L) relativ zu dem Kuppelträger (11; 111) und/oder einer mechanischen Belastung des Kuppelträgers (11; 111) durch den Anhänger (A) oder den Lastenträger (L), und zur Ausgabe mindestens eines den Kupplungsnutzungszustand repräsentierenden Kupplungsnutzungssignals (30, 36, 37, 44) aufweist, und wobei die Anhängekupplung eine Stromversorgungseinrichtung (60) zur elektrischen Stromversorgung des Anhängers (A) aufweist, **dadurch gekennzeichnet, dass** die Stromversorgungseinrichtung (60) eine Elektro-Nutzungssensoranordnung (68) zur Erzeugung eines Elektro-Nutzungssignals (69) in Abhängigkeit von einer Nutzung der Stromversorgungseinrichtung (60) durch den Anhänger aufweist und das Verfahren **gekennzeichnet ist durch**:
Erzeugen einer Störungsinformation (58) anhand einer logischen Verknüpfung des Elektro-Nutzungssignals (69) und des mindestens einen Kupplungsnutzungssignals (30, 36, 37, 44) **durch** eine Auswerteeinrichtung (50), und
Signalisieren eines Fehlers in der Störungsinformation (58) durch die Auswerteeinrichtung (50), wenn das Elektro-Nutzungssignal (69) keine Nutzung der Stromversorgungseinrichtung (60) anzeigt und das Kupplungsnutzungssignal (30, 36, 37, 44) eine Nutzung der Anhängekupplung (10; 110) **durch** einen Anhänger (A) oder Lastenträger (L) signalisiert.

## Claims

1. Trailer coupling (10; 110) for a motor vehicle, in particular a car, wherein the trailer coupling (10; 110) includes a coupling member (11; 111) on which is mounted a coupling element (14; 114) for attaching a trailer (A), wherein the trailer coupling (10; 110) has at least one coupling use sensor (31-33) to detect at least one coupling use status dependent on use of the coupling member (11; 111), in particular an angular position of the trailer (A) or the load carrier (L) relative to the coupling member (11; 111) and/or a mechanical loading of the coupling member (11; 111) by the trailer (A) or the load carrier (L) and to output at least one coupling use signal (30, 36, 37, 44) representing the coupling use status, and wherein the trailer coupling (10; 110) has a power supply facility (60) for the electrical power supply of the trailer (A), wherein the power supply facility (60) has an electrical use sensor array (68) to generate an electrical use signal (69) depending on use of the power supply facility (60) by the trailer (A), **characterised in that** it has an evaluation unit (50) which, with the aid of a logical linking of the electrical use signal (69) and the coupling use signal or signals (30, 36, 37, 44), generates fault information (58), and that the evaluation unit (50) signals a fault in the fault information (58) if the electrical use signal (69) indicates no use of the power supply facility (60) and the coupling use signal (30, 36, 37, 44) signals use of the trailer coupling (10; 110) by a trailer (A) or load carrier (L).

2. Trailer coupling (10; 110) according to claim 1, **characterised in that** the coupling use sensor or sensors (31-33) includes or include on at least one support element of the trailer coupling (10; 110), in particular the coupling member (11; 111), a load sensor array to generate at least one load signal depending on a mechanical loading, in particular a support load or tensile load, of the trailer coupling (10; 110), in particular of the coupling element (14; 114), wherein the coupling use signal (30, 36, 37, 44) is formed with the aid of the load signal or signals.

3. Trailer coupling (10; 110) according to claim 2, **characterised in that** the mechanical loading includes a support load and/or a tensile load, and/or that the coupling use signal (30, 36, 37, 44) indicates use of the trailer coupling (10; 110) if a threshold of the mechanical loading is exceeded.

4. Trailer coupling according to claim 2 or 3, **characterised in that** the load signal or signals or the coupling use signal (30, 36, 37, 44) includes or include a logical linking of at least two pieces of load sensor information, in particular load sensor information signalling loadings of the coupling member (11; 111) in different force directions, or redundant load sensor information, or a logical linking of load sensor information with a further coupling use signal (30, 36, 37, 44) indicating use of the trailer coupling (10; 110).

5. Trailer coupling according to any of claims 2 to 4, **characterised in that** the load sensor information to be linked includes a support load signal and a tensile load signal, so that only if a support load threshold and a tensile load threshold are exceeded does or do the load signal or signals indicate a mechanical connection between the trailer (A) and the motor vehicle.

6. Trailer coupling according to any of the preceding claims, **characterised in that** the coupling use sensor or sensors (31-33) includes or include at least one object sensor (43), in particular an optical and/or inductive sensor and/or an eddy current sensor, to detect an object affecting coupling of the trailer (A) or the load carrier (L) to the coupling member (11; 111) or coupling element (14; 114).

7. Trailer coupling according to claim 6, **characterised in that** the object sensor or sensors (43) is or are designed to detect a closed position of the coupling device and/or to detect a geometrical extension of the coupling device.

8. Trailer coupling according to any of the preceding claims, **characterised in that** the evaluation unit (50) signals a fault in the fault information (58) if the electrical use signal (69) indicates use of the power supply facility (60) and the coupling use signal (30, 36, 37, 44) signals no use of the trailer coupling (10; 110) by a trailer (A) or load carrier (L).

9. Trailer coupling according to any of the preceding claims, **characterised in that** the electrical use sensor array includes an optical sensor and/or an inductive sensor and/or a capacitive sensor to detect whether a push-on connector of the trailer (A) is inserted in a plug connector (61) of the power supply facility (60) of the trailer coupling (10; 110), and/or that the electrical use sensor array (64) is a sensor array to detect whether the power supply facility (60) of the trailer coupling (10; 110) is connected to a power circuit of the trailer (A).

10. Trailer coupling according to any of the preceding claims, **characterised in that** the coupling member (11; 111) is adjustable on a holder (12), which is or may be fixed to the motor vehicle (100), between a position of use (G) in which the coupling member (11; 111) extends backwards from a rear section (101) of the motor vehicle (100) to attach a trailer (A) or a load carrier (L), and an inoperative position (N) in which the coupling member (11; 111) is moved away from the holder (12) or closer to the motor vehicle (100), and that the evaluation unit (50) generates fault information (58) with the aid of a logical linking of a position of use signal (35), which in the position of use (G) has a position of use value and in the inoperative position (N) has an inoperative position value, and the electrical use signal (69).

11. Trailer coupling according to claim 10, **characterised in that** the evaluation unit (50) generates fault information (58) with the aid of a logical linking of the position of use signal (35) with the electrical use signal (69) and the coupling use signal or signals (30, 36, 37, 44).

12. Electrical monitoring device as part of a control unit or a sensor array for a trailer coupling (10; 110) for a motor vehicle, in particular a car, wherein the trailer coupling (10; 110) includes a coupling member (11; 111) on which is mounted a coupling element (14; 114) for attaching a trailer (A), and on at least one support element of the trailer coupling, in particular the coupling member (11; 111), there is provided a load sensor array to generate at least one load signal depending on a mechanical loading caused by the attached trailer (A), in particular a support load or a tensile load, and wherein the trailer coupling has a power supply facility (60) for the electrical power supply of the trailer (A), wherein the power supply facility (60) has a use sensor array to generate an electrical use signal (69) depending on use of the power supply facility (60) by the trailer (A), **characterised in that** it has an evaluation unit (50) which, with the aid of a logical linking of the electrical use signal (69) and the load signal or signals, generates fault information (58), and that the evaluation unit (50) signals a fault in the fault information (58) if the electrical use signal (69) indicates no use of the power supply facility (60) and the coupling use signal (30, 36, 37, 44) signals use of the trailer coupling (10; 110) by a trailer (A) or load carrier (L).

13. Trailer coupling according to claim 12, **characterised in that** the load sensor array and/or the use sensor array form part of the monitoring device.

14. Method for a trailer coupling for a motor vehicle, in particular a car, wherein the trailer coupling (10; 110) includes a coupling member (11; 111) on which is mounted a coupling element (14; 114) for attaching a trailer (A), wherein the trailer coupling has at least one coupling use sensor (31-33) to detect at least one coupling use status dependent on use of the coupling member (11; 111), in particular an angular position of the trailer (A) or the load carrier (L) relative to the coupling member (11; 111) and/or a mechanical loading of the coupling member (11; 111) by the trailer (A) or the load carrier (L) and to output at least one coupling use signal (30, 36, 37, 44) representing the coupling use status, and wherein the trailer coupling has a power supply facility (60) for the electrical power supply of the trailer (A), **characterised in that** the power supply facility (60) has an electrical use sensor array (68) to generate an electrical use signal (69) depending on use of the power supply facility (60) by the trailer (A) and the method is **characterised by**;
generation of fault information (58) with the aid of a logical linking of the electrical use signal (69) and the coupling use signal or signals (30, 36, 37, 44) by an evaluation unit (50), and
signalling of a fault in the fault information (58) by the evaluation unit (50) if the electrical use signal (69) indicates no use of the power supply facility (60) and the coupling use signal (30, 36, 37, 44) signals use of the trailer coupling (10; 110) by a trailer (A) or load carrier (L).

## Revendications

1. Attelage (10; 110) pour un véhicule automobile, en particulier un véhicule de tourisme, dans lequel l'attelage (10 ; 110) comporte un support d'attelage (11 ; 111), au niveau duquel un élément de couplage (14; 114) est agencé pour l'attelage d'une remorque (A), dans lequel l'attelage (10 ; 110) présente au moins un capteur d'utilisation d'attelage (31-33) pour la détection d'au moins un état d'utilisation d'attelage dépendant d'une utilisation du support d'attelage (11 ; 111), en particulier d'une position angulaire de la remorque (A) ou du support de charge (L) par rapport au support d'attelage (11 ; 111) et/ou une sollicitation mécanique du support d'attelage (11 ; 111) par la remorque (A) ou le support de charge (L), et pour la sortie d'au moins un signal d'utilisation d'attelage (30, 36, 37, 44) représentant l'état d'utilisation d'attelage, et dans lequel l'attelage (10 ; 110) présente un dispositif d'alimentation en courant (60) pour l'alimentation en courant électrique de la remorque (A), dans lequel le dispositif d'alimentation en courant (60) présente un agencement de capteur d'utilisation électrique (68) pour la production d'un signal d'utilisation électrique (69) en fonction d'une utilisation du dispositif d'alimentation en courant (60) par la remorque (A), **caractérisé en ce qu'**il présente un dispositif d'évaluation (50) qui produit à l'aide d'une combinaison logique du signal d'utilisation électrique (69) et d'au moins un signal d'utilisation d'attelage (30, 36, 37, 44) une information de dérangement (58), et que le dispositif d'évaluation (50) signale dans l'information de dérangement (58) une erreur lorsque le signal d'utilisation électrique (69) n'indique aucune utilisation du dispositif d'alimentation en courant (60) et le signal d'utilisation d'attelage (30, 36, 37, 44) signale une utilisation de l'attelage (10 ; 110) par une remorque (A) ou un support de charge (L).

2. Attelage (10 ; 110) selon la revendication 1, **caractérisé en ce que** l'au moins un capteur d'utilisation d'attelage (31-33) comporte au niveau d'au moins un élément porteur de l'attelage (10 ; 110), en particulier du support d'attelage (11; 111), un agencement de capteur de sollicitation pour la production d'au moins un signal de charge en fonction d'une sollicitation mécanique, en particulier d'une charge d'appui ou d'une charge de traction, de l'attelage (10 ; 110), en particulier de l'élément de couplage (14; 114), dans lequel le signal d'utilisation d'attelage (30, 36, 37, 44) est formé à l'aide d'au moins un signal de charge.

3. Attelage (10 ; 110) selon la revendication 2, **caractérisé en ce que** la sollicitation mécanique comporte une charge d'appui et/ou une charge de traction et/ou que le signal d'utilisation d'attelage (30, 36, 37, 44) signale une utilisation de l'attelage (10 ; 110) en cas de dépassement d'une valeur seuil de la sollicitation mécanique.

4. Attelage selon la revendication 2 ou 3, **caractérisé en ce que** l'au moins un signal de charge ou le signal d'utilisation d'attelage (30, 36, 37, 44) comporte une combinaison logique d'au moins deux informations de capteur de charge, en particulier des informations de capteur de charge signalant des sollicitations du support d'attelage (11 ; 111) dans différents sens de force ou des informations de capteur de charge redondantes, ou une combinaison logique d'une information de capteur de charge avec un autre signal d'utilisation d'attelage (30, 36, 37, 44) signalant une utilisation de l'attelage (10 ; 110).

5. Attelage selon l'une des revendications 2 à 4, **caractérisé en ce que** les informations de capteur de charge à combiner comportent un signal de charge d'appui et un signal de charge de traction de sorte que seulement en cas de dépassement d'une valeur seuil de charge d'appui et d'une valeur seuil de charge de traction l'au moins un signal de charge signale une liaison mécanique entre la remorque (A) et le véhicule automobile.

6. Attelage selon l'une des revendications précédentes, **caractérisé en ce que** l'au moins un capteur d'utilisation d'attelage (31-33) comporte au moins un capteur d'objet (43), en particulier un capteur optique et/ou inductif et/ou un capteur à courant de Foucault, pour la détection d'un objet agissant sur un support d'attelage (11; 111) ou un élément de couplage (14; 114) pour l'attelage de la remorque (A) ou du support de charge (L).

7. Attelage selon la revendication 6, **caractérisé en ce que** l'au moins un capteur d'objet (43) est configuré pour la détection d'une position de fermeture du dispositif de couplage et/ou pour la détection d'une extension géométrique du dispositif de couplage.

8. Attelage selon l'une des revendications précédentes, **caractérisé en ce que** le dispositif d'évaluation (50) signale dans l'information de dérangement (58) une erreur lorsque le signal d'utilisation électrique (69) indique une utilisation du dispositif d'alimentation en courant (60) et le signal d'utilisation d'attelage (30, 36, 37, 44) ne signale aucune utilisation de l'attelage (10 ; 110) par une remorque (A) ou un support de charge (L).

9. Attelage selon l'une des revendications précédentes, **caractérisé en ce que** l'agencement de capteur d'utilisation comporte un capteur optique et/ou un capteur inductif et/ou un capteur capacitif pour détecter si un connecteur de la remorque (A) est enfiché dans un connecteur (61) du dispositif d'alimentation en courant (60) de l'attelage (10 ; 110) et/ou que l'agencement de capteur d'utilisation (64) comporte un agencement de capteur pour détecter si le dispositif d'alimentation en courant (60) de l'attelage (10 ; 110) est relié à un circuit électrique de la remorque (A).

10. Attelage selon l'une des revendications précédentes, **caractérisé en ce que** le support d'attelage (11 ; 111) est réglable au niveau d'un support (12) qui est ou peut être fixé au véhicule automobile (100), entre une position d'utilisation, dans laquelle le support d'attelage (11 ; 111) dépasse vers l'arrière d'une partie arrière (101) du véhicule automobile (100) pour l'attelage d'une remorque (A) ou d'un support de charge (L), et une position de non-utilisation (N), dans laquelle le support d'attelage (11 ; 111) est déplacé loin du support (12) ou plus près du véhicule automobile (100), et que le dispositif d'évaluation (50) produit une ou l'information de dérangement (58) à l'aide d'une combinaison logique d'un signal de position d'utilisation (35) qui présente dans la position d'utilisation (G) une valeur de position d'utilisation et dans la position de non-utilisation (N) une valeur de position de non-utilisation, avec le signal d'utilisation électrique (69).

11. Attelage selon la revendication 10, **caractérisé en ce que** le dispositif d'évaluation (50) produit l'information de dérangement (58) à l'aide d'une combinaison logique du signal de position d'utilisation (35) avec le signal d'utilisation électrique (69) et l'au moins un signal d'utilisation d'attelage (30, 36, 37, 44).

12. Dispositif de surveillance électrique comme constituant d'un appareil de commande ou d'un agencement de capteur pour un attelage (10 ; 110) pour un véhicule automobile, en particulier un véhicule de tourisme, dans lequel l'attelage (10 ; 110) comporte un support d'attelage (11; 111), au niveau duquel un élément de couplage (14; 114) est agencé pour l'attelage d'une remorque (A), et au niveau d'au moins un élément porteur de l'attelage, en particulier du support d'attelage (11 ; 111) un agencement de capteur de sollicitation est prévu pour la production d'au moins un signal de charge en fonction d'une sollicitation mécanique causée par la remorque attelée (A), en particulier une charge d'appui ou une charge de traction, et dans lequel l'attelage présente un dispositif d'alimentation en courant (60) pour l'alimentation en courant électrique de la remorque (A), dans lequel le dispositif d'alimentation en courant (60) présente un agencement de capteur d'utilisation pour la production d'un signal d'utilisation électrique (69) en fonction d'une utilisation du dispositif d'alimentation en courant (60) par la remorque (A), **caractérisé en ce qu'**il présente un dispositif d'évaluation (50) qui produit à l'aide d'une combinaison logique du signal d'utilisation électrique (69) et d'au moins un signal de charge une information de dérangement (58), et que le dispositif d'évaluation (50) signale dans l'information de dérangement (58) une erreur lorsque le signal d'utilisation électrique (69) n'indique aucune utilisation du dispositif d'alimentation en courant (60) et le signal d'utilisation d'attelage (30; 36, 37, 44) signale une utilisation de l'attelage (10 ; 110) par une remorque (A) ou un support de charge (L).

13. Attelage selon la revendication 12, **caractérisé en ce que** l'agencement de capteur de sollicitation et/ou l'agencement de capteur d'utilisation forment un constituant du dispositif de surveillance.

14. Procédé pour un attelage pour un véhicule automobile, en particulier un véhicule de tourisme, dans lequel l'attelage (10 ; 110) comporte un support d'attelage (11 ; 111), au niveau duquel un élément de couplage (14; 114) est agencé pour l'attelage d'une remorque (A), dans lequel l'attelage présente au moins un capteur d'utilisation d'attelage (31-33) pour la détection d'au moins un état d'utilisation d'attelage dépendant d'une utilisation du support d'attelage (11 ; 111), en particulier d'une position angulaire de la remorque (A) ou du support de charge (L) par rapport au support d'attelage (11 ; 111) et/ou une sollicitation mécanique du support d'attelage (11 ; 111) par la remorque (A) ou le support de charge (L), et pour la sortie d'au moins un signal d'utilisation d'attelage (30, 36, 37, 44) représentant l'état d'utilisation d'attelage, et dans lequel l'attelage présente un dispositif d'alimentation en courant (60) pour l'alimentation en courant électrique de la remorque (A), **caractérisé en ce que** le dispositif d'alimentation en courant (60) présente un agencement de capteur d'utilisation électrique (68) pour la production d'un signal d'utilisation électrique (69) en fonction d'une utilisation du dispositif d'alimentation en courant (60) par la remorque et le procédé est **caractérisé par** :
la production d'une information de dérangement (58) à l'aide d'une combinaison logique du signal d'utilisation électrique (69) et d'au moins un signal d'utilisation d'attelage (30, 36, 37, 44) par un dispositif d'évaluation (50), et
la signalisation d'une erreur dans l'information de dérangement (58) par le dispositif d'évaluation (50) lorsque le signal d'utilisation électrique (69) n'indique aucune utilisation du dispositif d'alimentation en courant (60) et le signal d'utilisation d'attelage (30, 36, 37, 44) signale une utilisation de l'attelage (10 ; 110) par une remorque (A) ou un support de charge (L).
